# EUROPÄISCHE PATENTSCHRIFT

(11) **EP 0 644 092 B1**
(45) Veröffentlichungstag und Bekanntmachung des Hinweises auf die Patenterteilung: **11.12.1996**
(21) Anmeldenummer: 94111087.6
(22) Anmeldetag: 16.07.1994
(51) Int. Cl.: B60T 8/36

(54) **Steuereinrichtung**
Control device
Dispositif de commande

(30) Priorität: 21.09.1993 DE 4331966
(43) Veröffentlichungstag der Anmeldung: 22.03.1995
(73) Patentinhaber: WABCO GmbH, D-30453 Hannover (DE)
(72) Erfinder: Lichtenberg, Wolfgang, D-30457 Hannover (DE)
(74) Vertreter: Schrödter, Manfred, Dipl.-Ing.

(56) Entgegenhaltungen:
- EP-A- 0 160 750
- DE-A- 2 425 990
- DE-A- 3 404 189
- DE-A- 3 928 108
- DE-A- 4 118 834
- FR-A- 2 654 694

## Beschreibung

Die Erfindung betrifft eine Anordnung gemäß dem Oberbegriff des Patentanspruchs 1.

Die in der elektrischen Einrichtung einer derartigen Anordnung verwendeten elektrischen Bauelemente sind, je nach ihrer Art, zum Teil oder insgesamt nicht druckbeständig. Die diese elektrische Einrichtung aufnehmende Gehäusekammer muß daher beatmet sein. Dabei ist unter "beatmet" zu verstehen, daß sich in der Gehäusekammer kein höherer oder geringerer Druck als der Atmosphärendruck aufbauen kann. In diesem Zusammenhang ist es gleichgültig, ob dieser Druck von der Erdatmosphäre oder von einer künstlichen Atmosphäre, beispielsweise aus einem Schutzgas, stammt.

Es ist üblich, die Beatmung der Gehäusekammer über eine eigene Beatmungseinrichtung vorzunehmen, welche eine Strömung sowohl aus der Gehäusekammer in die Atmosphäre als auch in Gegenrichtung erlaubt. Ein weiteres Ziel der Beatmungseinrichtung ist, das Eindringen von Verunreinigungen und Feuchtigkeit aus der Atmosphäre in die Gehäusekammer zu unterbinden. Dieses Ziel wird nicht in allen Fällen in zufriedenstellendem Umfang erreicht. Betriebsstörungen können dann die Folge sein.

Die EP-A 0 160 750 zeigt eine Anordnung der eingangs genannten Art, wenn unterstellt wird, daß die darin erwähnte Steuereinrichtung (dort 41) in einem Gehäuse eine Gehäusekammer zur Aufnahme der die Signale des Lastsensors (dort 42) und der Drucksensoren (dort 43, 44) verarbeitenden elektrischen Einrichtung aufweist. Über die Beatmung dieser Gehäusekammer enthält die EP-A keine Aussage. Diese Beatmung dürfte deshalb in der, vorstehend aufgezeigten, üblichen Weise erfolgen.

Die DE-A-39 28 108 zeigt eine Anordnung der eingangs genanntenArt, deren Ventileinrichtung dazu dient, die zur Aufnahme der elektrische Signale verarbeitenden elektrischen Einrichtung dienende Gehäusekammer im Normalbetrieb unter Überdruck und ausnahmsweise, z. B. im Reparaturfalle, unter Atmosphärendruck zu setzen. Diese Lösung schützt die Gehäusekammer hervorragend gegen das Eindringen von Verunreinigungen und Feuchtigkeit aus der Atmosphäre. Allerdings ist diese Lösung in Verbindung mit einer elektrischen Einrichtung, die nicht druckbeständige Bauelemente enthält, ungeeignet. Außerdem ist bei dieser Lösung die Gehäusekammer zwar gelegentlich, nämlich im Ausnahmefall, an die Druckentlastungseinrichtung der Ventileinrichtung angeschlossen, aber durch die Ventileinrichtung hindurch.

Der Erfindung liegt die Aufgabe zugrunde, die Betriebssicherheit einer Steuereinrichtung der eingangs genannten, für nicht druckbeständige Bauelemente geeigneten, Art mit einfachen Mitteln zu verbessern.

Diese Aufgabe wird durch die in dem Patentanspruch 1 angegebene Erfindung gelöst. Fortbildungen und vorteilhafte Ausgestaltungen sind in den Unteransprüchen angegeben.

Die Erfindung wird nunmehr unter Nennung weiterer Vorteile anhand zeichnerisch dargestellter Ausführungsbeispiele erläutert.

Es zeigen
- Figur 1: schematisch eine grundlegende erfindungsgemäße Anordnung,
- Figur 2: eine Kombination aus einer Steuereinrichtung und einer Ventileinrichtung.

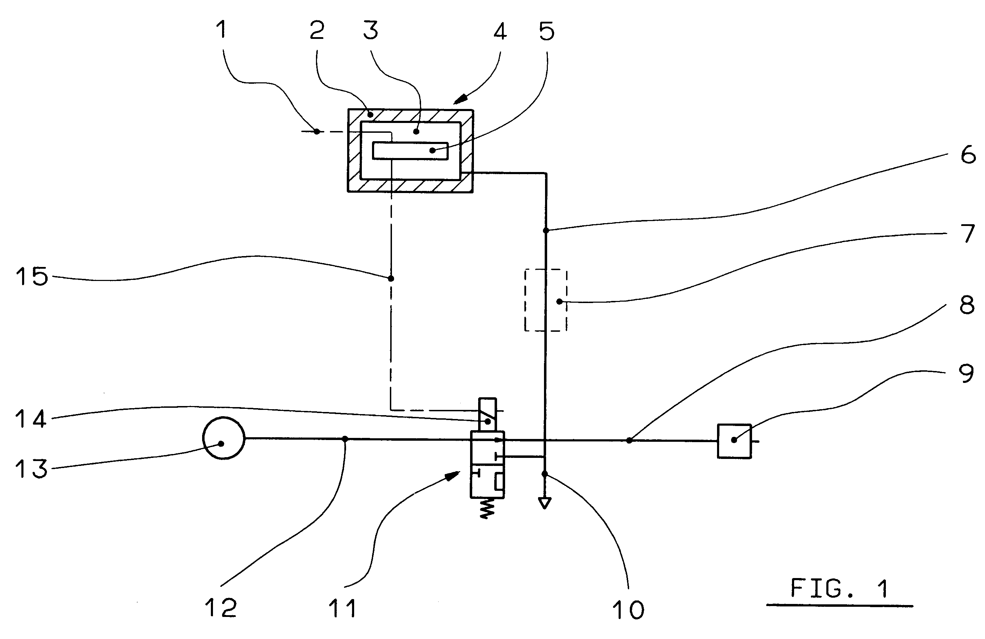

Figur 1 zeigt schematisch eine generell mit (4) bezeichnete Steuereinrichtung mit einem Gehäuse (2). In dem Gehäuse (2) befindet sich eine Gehäusekammer (3). In der Gehäusekammer (3) ist eine, durch eine platinenartige Darstellung symbolisierte, elektrische Einrichtung (5) angeordnet und auf eine bekannte und geeignete Weise gehaltert.

Figur 1 zeigt des weiteren in einer normierten schematischen Darstellung eine Ventileinrichtung (11). Diese ist in der Verbindung (8, 12) zwischen einem Druckvorrat (13) und einem Druckverbraucher (9) angeordnet.

Außer den dem Anschluß an die Verbindung (8, 12) dienenden Anschlüssen besitzt die Ventileinrichtung (11) eine in die Atmosphäre mündende Druckentlastungseinrichtung (10). Die Druckentlastungseinrichtung (10) ist als von der Ventileinrichtung (11) ausgehende Leitung dargestellt. In dieser Ausbildung ermöglicht die Druckentlastungseinrichtung (10) die Verlegung ihrer Mündung an einen besonders vorteilhaften Ort, z. B. bei einem watfähigen Fahrzeug außerhalb der Wattiefe. Die Druckentlastungseinrichtung (10) kann aber auch die Gestalt eines Gehäusekanals haben, der direkt an der Gehäuseoberfläche in die Atmosphäre mündet. Es ist auch möglich, an eine Druckentlastungseinrichtung einen Geräuschdämpfer und/oder einen Schutzfilter oder eine Kombination von Geräuschdämpfer und Schutzfilter anzuschließen.

Die Gehäusekammer (3) des Gehäuses (2) der Steuereinrichtung (4) ist über eine Verbindungseinrichtung (6) mit der Druckentlastungseinrichtung (10) verbunden. Die Verbindungseinrichtung (6) besteht im einfachsten Fall aus einer einfachen Rohrleitung.

Die Ventileinrichtung (11) ist in zwei Stellungen steuerbar. In der ersten Stellung verbindet sie den Druckverbraucher (9) mit dem Druckvorrat (13). In der zweiten Stellung trennt die Ventileinrichtung (11) den Druckverbraucher (9) von dem Druckvorrat (13) und verbindet den Druckverbraucher (9) mit der Druckentlastungseinrichtung (10).

In der Druckentlastungseinrichtung (10) und damit in der Verbindungseinrichtung (6) sowie in der Gehäusekammer (3) herrscht in der Regel ständig der Atmosphärendruck. Allerdings kann es vorkommen, daß, wenn die Ventileinrichtung (11) in ihrer zweiten Stellung ist, während des Ausströmens des Druckmittels aus dem Druckverbraucher (9) in der Druckentlastungseinrichtung (10) ein Überdruck auftritt. Dieser Überdruck pflanzt sich jedoch in der Regel nur zu einem kleinen Teil, wenn überhaupt, in die Gehäusekammer (3) fort, weil die Verbindungseinrichtung (6) hinsichtlich der Strömung des dazu erforderlichen Druckmittelvolumens als Drossel wirkt. Zwischen der Gehäusekammer (3) und der Atmosphäre kann also über die Verbindungseinrichtung (6) und die Druckentlastungseinrichtung (10) in der Regel ein unbehinderter Druckausgleich, mit anderen Worten eine Beatmung, stattfinden.

Zur Beatmung gehört, wie schon erwähnt, auch die Möglichkeit einer Strömung von der Atmosphäre zu der Gehäusekammer (3). Das diesen Weg einschlagende Atmosphärenmedium kann feucht sein. Die Feuchtigkeit wird jedoch in der Regel nicht in die Gehäusekammer (3) durchtreten, da sie sich in der Druckentlastungseinrichtung (10) und/oder in der Verbindungseinrichtung (6) niederschlägt.

In Fortbildung des Ausführungsbeispiels kann in der Verbindungseinrichtung (6) eine Gastrocknungseinrichtung angeordnet werden, wie sie mit den Bezugszeichen (7) gestrichelt angedeutet ist. Eine solche Gastrocknungseinrichtung fördert den Feuchtigkeitsentzug aus dem in Richtung der Gehäusekammer (3) strömenden Atmphosphärenmedium. Sie kann auf jede bekannte Art und Weise ausgebildet sein, beispielsweise als Heizelement oder nach einem chemischen Prinzip wirkend. Im letzteren Fall kann der Feuchtigkeitsentzug mittels eines Adsorbtions-/Absorbtionsmittels erfolgen, wie es beispielsweise in einem Lufttrockner nach der DE 33 15 580 A1 verwendet wird. Es sei erwähnt, daß es Bauarten der Gastrocknungseinrichtung gibt, beispielsweise die zuletzt erwähnte, welche die Drosselwirkung der Verbindungseinrichtung verstärken.

Es liegt auf der Hand, daß die Steuerung der Ventileinrichtung (11) auf jede bekannte Art erfolgen kann. Das Ausführungsbeispiel stellt in dieser Hinsicht eine spezielle Ausgestaltung dar, in der die Ventileinrichtung (11) elektrisch steuerbar ist und die Steuereinrichtung (4) zur Steuerung der Ventileinrichtung (11) ausgebildet ist. Die Ventileinrichtung (11) weist zu diesem Zweck eine elektrische Steuereinrichtung (14) auf, die in bekannter Weise, etwa als Magnet, ausgebildet ist. Die Steuereinrichtung (4) empfängt zu diesem Zweck elektrische Befehlssignale, verarbeitet diese in der elektrischen Einrichtung (5) und gibt entsprechende Befehlssignale an die Steuereinrichtung (14) der Ventileinrichtung (11) ab. Die Zuführung bzw. Abgabe der erwähnten Befehlssignale ist durch strichpunktiert dargestellte elektrische Leitungen (1, 15) angedeutet.

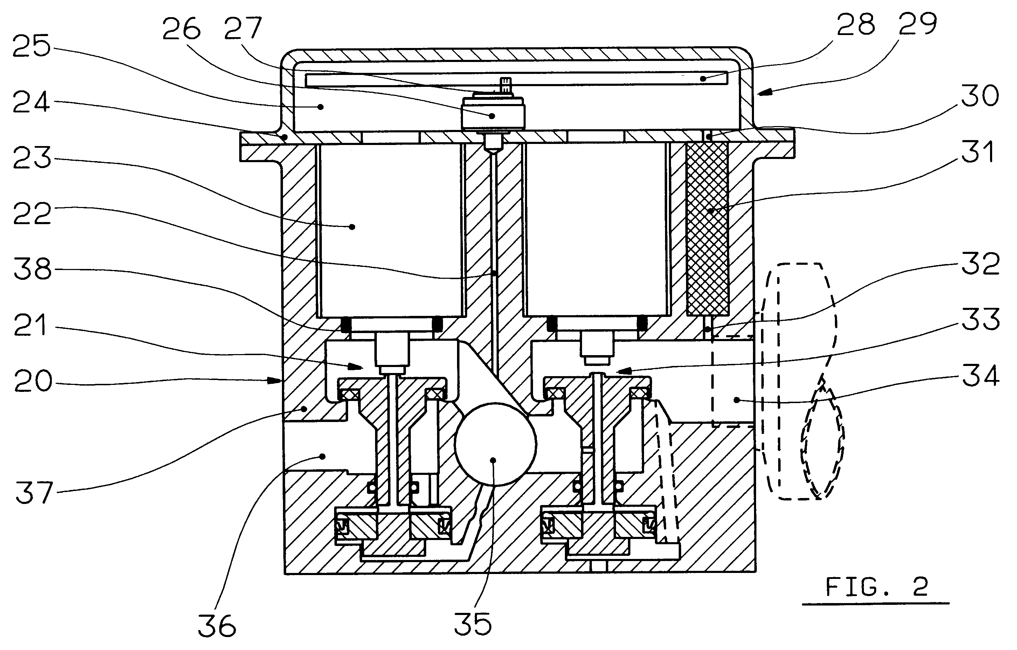

In der Figur 2 besitzen die Steuereinrichtung (29) und die darunter angeordnet dargestellte Ventileinrichtung (20) ein gemeinsames Gehäuse (24, 37). Das gemeinsame Gehäuse (24, 37) setzt sich zusammen aus dem Gehäuse (24) der Steuereinrichtung (29) und dem Gehäuse (37) der Ventileinrichtung (20). Jedes der zuletzt genannten Gehäuse kann einteilig sein, aber auch aus mehreren Einzelteilen zusammengesetzt sein. Im Ausführungsbeispiel sind beide Gehäuse durch nicht näher bezeichnete übliche Verbindungselemente zusammengebaut.

Die Ventileinrichtung (20) weist ein Einlaßventil (21) und ein Auslaßventil (33) auf, die beide durch Magnete elektrisch gesteuert werden. Das Einlaßventil (21) beherrscht die Verbindung eines Einlasses (36) mit einer Arbeitskammer (35), das Auslaßventil (33) beherrscht die Verbindung zwischen der Arbeitskammer (35) und einer Druckentlastungseinrichtung (34). Der in dieser Figur nicht dargestellte Druckverbraucher ist an die Arbeitskammer (35) angeschlossen. Mit Ausnahme ihres Gehäuses (37), welches zwecks Herstellung der Kombination mit der Steuereinrichtung (29) geändert ist, entspricht die Ventileinrichtung (20) einschließlich ihrer Betätigungsmagnete der in der DE 37 29 222 A1 beschriebenen Ventileinrichtung.

Zu der in der Gehäusekammer (25) des Gehäuses (24) der Steuereinrichtung (29) untergebrachten elektrischen Einrichtung (26, 28) gehört in diesem Falle auch ein Drucksensor (26), der den Druck in der Arbeitskammer (35), der zugleich der Druck in dem Druckverbraucher ist, mißt und in ein elektrisches Drucksignal umsetzt. Der Drucksensor (26) besitzt eine nicht bezeichnete Wirkfläche, die in der Zeichnung unten liegt und über einen Gehäusekanal (22) mit dem Druck in der Arbeitskammer (35) beaufschlagt ist. Die der Meßfläche des Drucksensors gegenüberliegende, d. h. in der Zeichnung oben liegende, Fläche (27) dient als Referenzfläche und muß im Interesse einer zuverlässigen Funktion der dem Ausführungsbeispiel zugehörigen Anlage wenigstens während der Auswertung der Drucksignale ständig mit Atmosphärendruck beaufschlagt sein.

In diesem Fall ist die Beatmung der Gehäusekammer (25) von besonderer Dringlichkeit, weil im Falle einer Leckage der Abdichtung (38) des dem Einlaßventil (21) zugeordneten Betätigungsmagneten (23) Druckmittel aus der Arbeitskammer (35) an dem Betätigungsmagneten (23) vorbei in die Gehäusekammer (25) übertreten kann. Einem daraus folgenden und Betriebsstörungen verursachenden Druckaufbau wird jedoch durch einen Gehäusekanal (30, 31, 32) begegnet, der sich durch die Gehäuse (24) und (37) hindurch von der Gehäusekammer (25) zu der Druckentlastungseinrichtung (34) erstreckt und die Rolle der Verbindungseinrichtung (6) des früheren Ausführungsbeispiels übernimmt.

Für den Gehäusekanal (30, 31, 32) ist innerhalb des Gehäuses (37) der Ventileinrichtung (20) ein aufgeweiteter Teil (31) vorgesehen. Dieser bildet für das bei der Beatmung zwischen der Gehäusekammer (25) und der Druckentlastungseinrichtung (34) wechselnde Atmosphärenmedium eine Pufferkammer und unterstützt wirkungsvoll die Drosselwirkung des Gehäusekanals (30, 31, 32) im Hinblick auf das Durchschlagen von Überdruckspitzen von der Druckentlastungseinrichtung (34) zu der Gehäusekammer (25).

In weiterer Fortbildung des Ausführungsbeispiels ist, durch eine Kreuzschraffur angedeutet, in dem aufgeweiteten Teil (31) eine Gastrocknungseinrichtung untergebracht, für deren Ausführung das beim früheren Ausführungsbeispiel Gesagte entsprechend gilt.

Auch im übrigen gelten, sofern sich aus dem Vorstehenden nichts Widersprechendes ergibt, die für das eine Ausführungsbeispiel gemachten Aussagen für das andere Ausführungsbeispiel direkt oder in entsprechender Anwendung mit.

Schließlich erkennt der Fachmann, daß sich der Schutzbereich der Erfindung nicht in den beschriebenen Ausführungsbeispielen erschöpft, sondern alle Ausgestaltungen umfaßt, deren Merkmale sich den Patentansprüchen unterordnen. Insbesondere ist die Erfindung mit jeder beliebigen Ventileinrichtung mit einer Druckentlastungseinrichtung durchführbar.

## Patentansprüche

1. Anordnung mit einer Steuereinrichtung (4; 29) und einer Ventileinrichtung (11; 20), wobei die Steuereinrichtung (4; 29) ein Gehäuse (2; 24) mit einer Gehäusekammer (3; 25) zur Aufnahme einer elektrische Signale verarbeitenden elektrischen Einrichtung (5; 26, 28) und die Ventileinrichtung (11; 20) eine einen Druckausgleich mit der Atmosphäre ermöglichende Druckentlastungseinrichtung (10; 34) aufweisen,
dadurch gekennzeichnet,
daß die Gehäusekammer (3; 25) über eine Verbindungsleitung (6; 30, 31, 32) direkt mit der Druckentlastungseinrichtung (10; 34) verbunden ist.

2. Anordnung nach Anspruch 1, wobei die Ventileinrichtung (11; 20) elektrisch steuerbar ist, dadurch gekennzeichnet, daß die Steuereinrichtung (4; 29) zur Steuerung der Ventileinrichtung (11; 20) ausgebildet ist.

3. Anordnung nach einem der vorhergehenden Ansprüche, dadurch gekennzeichnet, daß die Steuereinrichtung (29) und die Ventileinrichtung (20) ein gemeinsames Gehäuse (24, 37) besitzen und die Verbindungseinrichtung in Form eines Gehäusekanals (30, 31, 32) ausgebildet ist.

4. Anordnung nach einem der vorhergehenden Patentansprüche, dadurch gekennzeichnet, daß in der Verbindungsleitung (6) eine Gastrocknungseinrichtung (7) angeordnet ist.

5. Anordnung nach Anspruch 4, dadurch gekennzeichnet, daß die Gastrocknungseinrichtung (7) nach einem chemischen Prinzip wirkt.

## Claims

1. Arrangement having a control device (4; 29) and a valve device (11; 20), the control device (4; 29) having a housing (2; 24) provided with a housing chamber (3; 25) for receiving an electrical device (5; 26, 28) for processing electrical signals and the valve device (11; 20) having a pressure relief device (10; 34) allowing pressure equalisation with the atmosphere,
characterised in that
the housing chamber (3; 25) is connected directly to the pressure relief device (10; 34) via a connection line (6, 30, 31, 32).

2. Arrangement according to claim 1, in which the valve device (11; 20) is electrically controllable, characterised in that the control device (4; 29) is designed to control the valve device (11; 20).

3. Arrangement according to any one of the preceding claims, characterised in that the control device (29) and the valve device (20) have a common housing (24, 37) and the connection device is in the form of a housing channel (30, 31, 32).

4. Arrangement according to any one of the preceding claims, characterised in that a gas-drying device (7) is arranged in the connection line (6).

5. Arrangement according to claim 4, characterised in that the gas-drying device (7) works according to a chemical principle.

## Revendications

1. Agencement comprenant un dispositif de commande (4 ; 29) et un dispositif de soupape (11 ; 20), le dispositif de commande (4 ; 29) présentant un carter (2 ; 24) comprenant une chambre de carter (3 ; 25) pour l'accueil d'un dispositif (5 ; 26, 28) électrique traitant des signaux électriques, et le dispositif de soupape (11 ; 20) présentant un dispositif de décharge de pression (10 ; 34) rendant possible une égalisation de pression avec l'atmosphère,
caractérisé en ce
que la chambre de carter (3 ; 25) est reliée, par l'intermédiaire d'une conduite de liaison (6 ; 30, 31, 32), directement avec le dispositif de décharge de pression (10 ; 34).

2. Agencement selon la revendication 1, dans lequel, le dispositif de soupape (11 ; 20) est susceptible d'être commandé électriquement, caractérisé en ce que le dispositif de commande (4 ; 29) est constitué pour la commande du dispositif de soupape (11 ; 20).

3. Agencement selon une des précédentes revendications, caractérisé en ce, que le dispositif de commande (29) et le dispositif de soupape (20) possèdent un carter (24, 37) commun et que le dispositif de liaison est constitué sous forme d'un canal de carter (30, 31, 32).

4. Agencement selon une des précédentes revendications, caractérisé en ce, que dans la conduite de liaison (6), un dispositif de séchage de gaz (7) est agencé.

5. Agencement selon la revendication 4, caractérisé en ce, que le dispositif de séchage de gaz (7) agit selon un principe chimique.
